# EUROPEAN PATENT SPECIFICATION

(11) **EP 3 009 546 B1**
(45) Date of publication and mention of the grant of the patent: **30.05.2018**
(21) Application number: 14810682.6
(22) Date of filing: 12.06.2014
(51) Int. Cl.: D03D 1/00, D03D 11/00, D03D 15/00, B32B 5/02, F41H 1/02, F41H 5/04, B32B 5/12, B32B 5/22, B32B 5/26

(54) **BULLETPROOF MATERIAL**
KUGELSICHERES MATERIAL
MATÉRIAU PARE-BALLES

(30) Priority: 12.06.2013 KR 20130067366
(43) Date of publication of application: 20.04.2016
(73) Proprietor: Kolon Industries, Inc., Gwacheon-si, Gyeonggi-do 13837 (KR)
(72) Inventor: KIM, Jung Ha, Yongin-si, Gyeonggi-do 446-797 (KR); LEE, Chang Bae, Yongin-si, Gyeonggi-do 446-797 (KR)
(74) Representative: Ter Meer Steinmeister & Partner
(86) International application number: PCT/KR2014/005152
(87) International publication number: WO 2014/200276

(56) References cited:
- WO-A1-2007/047508
- WO-A1-2009/032585
- WO-A2-2009/008922
- WO-A2-2013/032246
- WO-A2-2013/056254
- KR-A- 20120 092 933
- US-A1- 2008 024 494
- US-A1- 2008 241 494
- US-A1- 2011 219 943

## Description

### [Technical Field]

The present invention relates to a bulletproof material, and more particularly to a bulletproof material having superior bulletproof performance and enhanced back-side deformation characteristics along with superior wearing sensation due to relatively light weight and soft texture.

### [Background Art]

Bulletproof products protecting the human body from bullets or shells require satisfactory wearing sensation along with superior bulletproof performance. However, in general, wearing sensation of bulletproof products was somewhat decreased so as to increase bulletproof performance. In other words, wearing sensation enhancement of bulletproof products generally caused bulletproof performance decrease.

It was published that a unidirectional fabric is used to lighten bulletproof products and increase bulletproof performance thereof. WO 2009/032585 A1 discloses a bulletproof material having a front side to be struck by a bullet and a back side at an opposite side of the front side, the bulletproof material comprising: a plurality of first fibrous layers at the front side and a second fibrous layer, wherein each of the first fibrous layers comprises a network of high-strength fiber having a tenacity of 11 g/denier or more and a tensile modulus of 200 g/denier or more, and the second fibrous layer comprises a network of carbon fiber, wherein the carbon fiber network is a woven fabric comprising carbon spun yarn as warp and weft. US Patent Laid-Open Publication No. 2011/0219943 suggests a composite fabric including all of a woven fabric composed of high-strength fiber and a unidirectional fabric composed of high-strength fiber, so as to increase bulletproof performance. The publication describes that the woven fabric of the composite fabric is preferably not coated with a matrix resin, and, if coating is performed, the woven fabric is preferably coated with a matrix resin having a chemical structure similar to that of the unidirectional fabric (see Paragraph No. [0054]). In addition, bulletproof products including all of the woven fabric and the unidirectional fabric exhibit superior bulletproof performance and further reduced back-side deformation due to bullet impact, compared to bulletproof products including only unidirectional fabrics (see Paragraph No. [0054]).

Although the publication suggests a composite fabric having superior bulletproof characteristics, enhancement is still required in regard to back-side deformation characteristics (anti-trauma).

For this reason, a method of adhering a polypropylene film to the rear side of a material was suggested to enhance back-side deformation characteristics of a bulletproof material. However, bulletproof vests made of the bulletproof material to which the polypropylene film is adhered have poor wearing sensation due to a rigid characteristic of the polypropylene film.

### [Disclosure]

### [Technical Problem]

Therefore, the present invention has been made in view of the above problems, and it is an object of the present invention to provide a bulletproof material to prevent problems caused by technical limitations and drawbacks related to those described above.

It is an object of the present invention to provide a bulletproof material having superior bulletproof performance and enhanced back-side deformation characteristics along with superior wearing sensation due to relatively light weight and soft texture.

Other characteristics and advantages of the present invention will be described below and partially obvious from described technologies. Alternatively, other characteristics and advantages of the present invention will be understood by implementing the present invention. Objects and other advantages of the present invention will realized and accomplished through structures specified by the detailed description and the accompanying claims.

### [Technical Solution]

In accordance with an aspect of the present invention, the above and other objects can be accomplished by the provision of a bulletproof material according to claim 1. It should be understood that the-above general description and detailed description below are provided to exemplify or describe the present invention and to provide more detailed description for inventions of the accompanying claims.

### [Advantageous Effects]

A bulletproof material according to the present invention is relatively light, but remarkably decreases back-side deformation when struck by bullets. In addition, the bulletproof material has relatively soft characteristics. Therefore, a bulletproof vest made of the bulletproof material has superior wearing sensation.

Hereinafter, other effects of the present invention and technical constitutions related to the same are described in detail.

### [Description of Drawings]

The above and other objects, features and other advantages of the present invention will be more clearly understood from the following detailed description taken in conjunction with the accompanying drawings, in which:
FIG. 1 illustrates is a sectional view of a bulletproof material according to Example 1 of the present invention;
FIG. 2 illustrates a sectional view of a bulletproof material according to Example 2 of the present invention;
FIG. 3 illustrates a sectional view of a bulletproof material according to Example 3 of the present invention; and
FIG. 4 illustrates a sectional view of a bulletproof material according to Example 4 of the present invention.

### [Best Mode]

Hereinafter, examples of a bulletproof material according to the present invention are described in detail with reference to the accompanying drawings.

These examples are provided only for illustration of the present invention and should not be construed as limiting the scope of the present invention. Therefore, the present invention is defined by the accompanying claims, and equivalents thereof.

An expression used in the present specification "high-strength fiber" indicates a fiber having a tenacity of 11 g/denier or more and a tensile modulus of 200 g/denier or more.

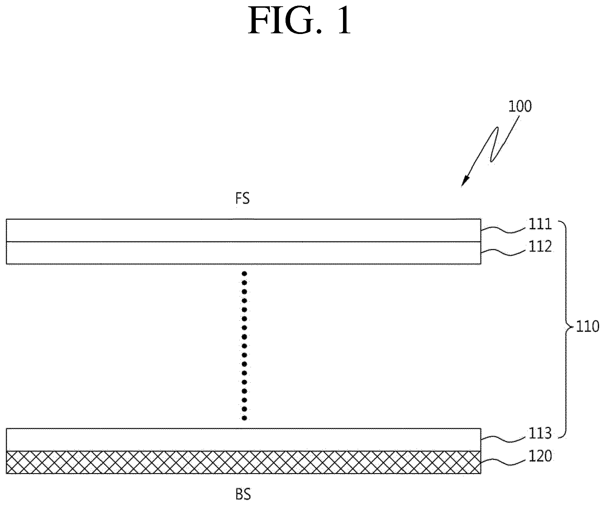

FIG. 1 illustrates a sectional view of a bulletproof material according to Example 1 of the present invention.

As shown in FIG. 1, a bulletproof material 100 according to Example 1 of the present invention has a front side (FS) to be struck by bullets and a back side (BS) opposite to FS. The bulletproof material 100 includes a plurality of first fibrous layers 110 at the front side (FS) and a second fibrous layer 120 adjacent to the first fibrous layers 110.

The bulletproof material 100 includes the first fibrous layers 110 in the proper number of plies and the second fibrous layer 120 in order to have a mass per unit satisfying lightening requirements of a bulletproof vest, for example, a mass per unit area of 3 to 6.8 kg/m². According to Example 1 of the present invention, the bulletproof material 100 includes 10 to 32-ply first fibrous layers 110 and a one-ply second fibrous layer 120.

The first fibrous layers 110 at the front side (FS) includes a network of high-strength fiber having a tenacity of 11 g/denier or more and a tensile modulus of 200 g/denier or more. The high-strength fiber may be ultrahigh molecular weight polyethylene (UHMWPE) fiber or aramid fiber.

According to Example 1 of the present invention, the network of the high-strength fiber is an aramid woven fabric including aramid fiber as warp and weft. Each woven fabric has a mass per unit area of 150 to 500 g/m². When the mass per unit area is less than 150g/m², gaps may be present between woven fabrics and thus bulletproof performance may be decreased. On the other hand, weaving is performed such that the mass per unit area is greater than 500g/m², production efficiency may be decreased.

Since the aramid fiber is vulnerable to moisture, bulletproof performance thereof may be decrease as time passes. So as to address such a problem, aramid woven fabrics of the first fibrous layers 110 may be coated with a water repellent including fluorocarbon, a cross-linking agent, and a hardness-enhancing resin.

The fluorocarbon provides water repellency to the first fibrous layers 110. A hydroxylated perfluoroalkylethyl acrylate copolymer may be used as the fluorocarbon.

Meanwhile, a water repellent ingredient such as fluorocarbon is removed from a network of high-strength fiber in the severe environments or after use for a long time, whereby properties of the high-strength fiber are deteriorated and bulletproof performance thereof may be rapidly decreased, due to moisture. Accordingly, in order to increase bonding between the high-strength fiber and the fluorocarbon, the water repellent may further include, other than fluorocarbon, an isocyanate-based compound such as, for example, toluene diisocyanate or methylene diphenyl diisocyanate, as a cross-linking agent.

In addition, in order to suppress back-side deformation of the bulletproof material 100, the water repellent may further include a hardness-enhancing resin such as polyvinyl acetate.

Selectively, the water repellent may further include an antifoaming agent (e.g., dipropylene glycol) for removing bubbles and an emulsion stabilizer (e.g., malic acid). In this case, the water repellent may include 0.5 to 10% by weight of fluorocarbon, 0.5 to 10% by weight of the hardness-enhancing resin, 0.5 to 5% by weight of the cross-linking agent, 0.1 to 2% by weight of the antifoaming agent, 0.1 to 2% by weight of the emulsion stabilizer, and 73 to 98.3% by weight of water.

When the content of fluorocarbon is less than 0.5% by weight, it is difficult to anticipate desired water repellency. When the content of fluorocarbon is greater than 10% by weight, water repellency is not greatly increased and flexibility of the bulletproof material 100 may be rather decreased.

When the content of the hardness-enhancing resin is less than 0.5% by weight, back-side deformation characteristics of the bulletproof material 100 are hardly enhanced. When the content of the hardness-enhancing resin is greater than 10% by weight, flexibility of the bulletproof material 100 is decreased and thus wearing sensation of a bulletproof vest made of the bulletproof material 100 is greatly decreased.

When the content of the cross-linking agent is less than 0.5% by weight, it is difficult to maintain desired water repellency. When the content of the cross-linking agent is greater than 5% by weight, effects are not increased, but manufacturing costs increase.

In order to apply the water repellent to the network of the high-strength fiber, a method such as padding, coating, immersing, spraying, brushing, or film-coating may be used. After applying the water repellent to the network, thermal treatment may be performed at 120 to 200 °C for 15 to 150 seconds.

Selectively, the network of the high-strength fiber of the first fibrous layers 110 may include a plurality of ultrahigh molecular-weight polyethylene fibers and/or aramid fibers arranged in one direction, and the network of the high-strength fiber may be coated with a composition including a polyurethane resin. In each of first fibrous layers 111, 112, and 113, high-strength fibers are unidirectionally oriented in parallel. The high-strength fiber of the first fibrous layers 111, 112, and 113 is coated with a composition including the polyurethane resin and thus arrangements of the high-strength fibers may be maintained. The composition may be sprayed onto the high-strength fibers or applied to the high-strength fibers in a film type. The neighboring fibrous layers 111 and 112 may be cross-plied such that the high-strength fibers of the fibrous layers 111 and 112 adjacent to each other form an angle of about 90°. The cross-plied fibrous layers 111 and 112 form one unidirectional fabric.

Selectively, the unidirectional fabric may be composed of four fibrous layers respectively including unidirectionally oriented very-high-density polyethylene fiber or aramid fiber. In this case, the four fibrous layers may be cross-plied such that rotation angles between the high-strength fibers thereof are 0°/90°/0°/90°.

The second fibrous layer 120 at the back side (BS) of the bulletproof material 100 includes a network of carbon fiber. The network of carbon fiber is a woven fabric including carbon spun yarn as warp and weft.

The second fibrous layer 120 has a mass per unit area of 110 to 480 g/m². When the mass per unit area is less than 110 g/m², gaps may present between the second fibrous layer 120, thus causing bulletproof performance decrease. On the other hand, when the second fibrous layer 120 is prepared such that the mass per unit area is greater than 480 g/m², lightening of the bulletproof material 100 is hindered or bulletproof performance decrease (when the number of the first fibrous layers is decreased to adjust the mass per unit area of the bulletproof material to a proper state) may be caused.

When physical impact from bullets is applied to the front side (FS) of the bulletproof material 100, the front side (FS) of the bulletproof material 100 is partially deformed. Such deformation is expanded to the back side (BS) of the bulletproof material 100, thus generating back-side deformation greater than allowable safe separation distance. When the back-side deformation of the bulletproof material 100 is severe, a wearer may suffer fetal damage.

According to the present invention, since a carbon fiber network of the second fibrous layer 120 at the back side (BS) of the bulletproof material 100 has an impact absorption force of almost O, the carbon fiber network is broken and disperses impact around, when struck by bullets is applied. As a result, back-side deformation characteristics of the bulletproof material 100 may be enhanced. In addition, in order to enhance the back-side deformation characteristics of the bulletproof material 100, the carbon fiber network has relatively soft characteristics, compared to rigid materials such as a polypropylene film conventionally suggested, and thus, the carbon fiber network may provide superior wearing sensation to bulletproof vests, compared to the polypropylene film. The carbon fiber network is coated with a composition including a phenol resin and a polyvinyl butyral resin. In particular, the composition includes 20 to 70% by weight of the phenol resin, 20 to 70% by weight of the polyvinyl butyral resin, and 1 to 10% by weight of a plasticizer. The plasticizer may be dioctyl phthalate (DOP), dioctyl adipate (DOA), tricresyl phosphate (TCP), or diisononyl phthalate (DINP). The phenol resin of the composition further increases hardness of the second fibrous layer 120, and the polyvinyl butyral resin increases adhesion between the first fibrous layer 113 and the second fibrous layer 120.

As examples of a method of coating the carbon fiber network with the composition, there are a method of immersing the network in a solution including the composition and a method of laminating the composition on the carbon fiber network in a film type.

First, the immersion method is described. The carbon fiber network is dipped in a composition diluted with a solvent (e.g., methanol) for 10 to 60 minutes. The dipping may be repeated several times such that the entire carbon fiber network is uniformly immersed in the composition. Subsequently, the dilution solvent used for the dipping process is removed by dying. Selectively, before the drying, the carbon fiber network with the composition may be squeezed. The squeezing may be continuously performed using a pressing roller or discontinuously performed using a pressing plate.

Here, the lamination method is described. A polymer film is formed using the composition. According to an embodiment of the present invention, the mass per unit area and thickness of the polymer film are formed such that the carbon fiber network has a mass per unit area of 100 to 400 g/m² and a weight ratio of the composition to the carbon fiber network is 10 to 20%. Subsequently, the polymer film is laminated on a side of the carbon fiber network. That is, on a side of the carbon fiber network, laying the polymer film, drying a carbon fiber network having the polymer film thereon at 20 to 60°C for 1 to 7 minutes, and applying pressure to the carbon fiber network and the polymer film at 100 to 130°C are sequentially performed. Drying may be continuously performed using a chamber or the like. In this case, the carbon fiber network on the polymer film passes through chamber(s) maintained at 20 to 60°C at a rate of 4 to 20 m/min. When drying temperature is less than 20°C, drying might not be smoothly performed. On the other hand, when the drying temperature is greater than 60°C, the composition of the polymer film is hardened and thus adhesion thereof to the first fibrous layer 113) may be decreased. The pressing may be continuously performed using a heated pressing roller or discontinuously performed using a pressing plate.

First, a composite sheet is formed by passing the carbon fiber network coated with the composition, i.e., the second fibrous layer 120 with the first fibrous layer 113, through a high-temperature and high-press pressurizer. Subsequently, the composite sheet is bonded with the fibrous layers 111 and 112 through, for example, diamond stitching.

Selectively, the coating process and the composite sheet formation process may be simultaneously performed. That is, a composite sheet of the first fibrous layer 113 and the second fibrous layer 120 may be formed by inserting the polymer film between the carbon fiber network and the first fibrous layer 113 and passing the same through a chamber maintained at about 50°C, followed by pressing the same by means of a roller heated to about 160°C.

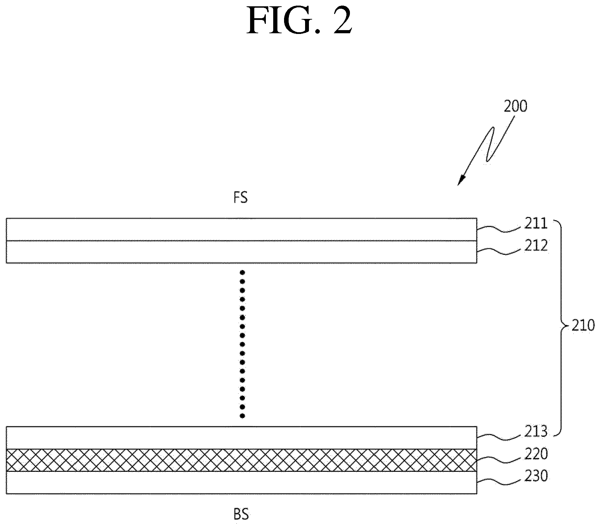

Hereinafter, a bulletproof material according to Example 2 of the present invention is described with reference to FIG. 2.

As illustrated in FIG. 2, a bulletproof material 200 according to Example 2 of the present invention includes a plurality of first fibrous layers 210 at a front side (FS), a second fibrous layer 220 adjacent to the first fibrous layers 210, and the third fibrous layer 230 at a back side (BS). In other words, the second fibrous layer 220 is located between the first fibrous layers 210 and a third fibrous layer 230.

According to Example 2 of the present invention, the first and third fibrous layers 210 to 230 include an aramid woven fabric as a network of high-strength fiber. The aramid woven fabric may be coated with a water repellent including fluorocarbon, a cross-linking agent, and a hardness-enhancing resin. Here, the cross-linking agent is an isocyanate-based compound and the hardness-enhancing resin is polyvinyl acetate.

The second fibrous layer 220 includes a carbon fiber network. The carbon fiber network is a woven fabric including carbon spun yarn as warp and weft, and is coated with a composition including a phenol resin and a polyvinyl butyral resin.

The bulletproof material 200 includes the first to third fibrous layers 210, 220, and 230 in the proper number of plies in order to have mass per unit area satisfying lightening requirements of a bulletproof vest, e.g., a mass per unit area of 3 to 6.8 kg/m².

One composite sheet is formed by passing the carbon fiber network coated with the composition, i.e., the second fibrous layer 220, along with the third fibrous layer 230 through a high-temperature and high-pressure pressurizer. Subsequently, the composite sheet may be bonded with the first fibrous layers 210 through, for example, diamond stitching, in an order as illustrated in FIG. 2.

Selectively, the coating process and the composite sheet formation process may be simultaneously performed. That is, a composite sheet of the second fibrous layer 220 and the third fibrous layer 230 may be formed by inserting the polymer film of the composition between the carbon fiber network and the third fibrous layer 230 and maintaining the same at about 50°C, followed by pressing the same by means of a roller heated to about 160°C.

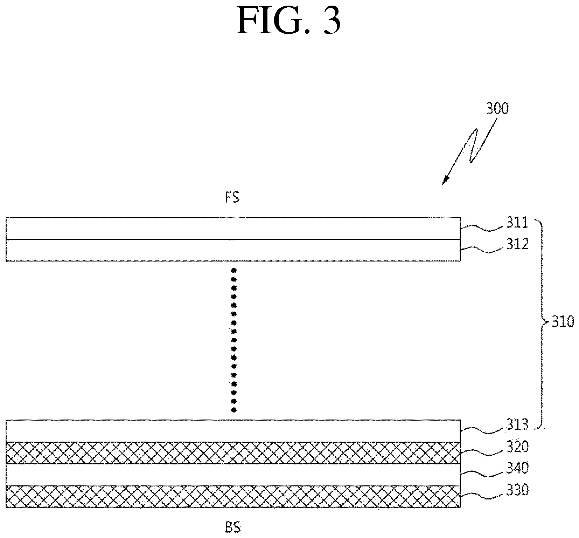

Hereinafter, a bulletproof material according to Example 3 of the present invention is described with reference to FIG. 3.

As illustrated in FIG. 3, a bulletproof material 300 according to Example 2 of the present invention includes a plurality of first fibrous layers 310 at a front side (FS), a second fibrous layer 320 adjacent to the first fibrous layers 310, a third fibrous layer 330 at a back side (BS), and a fourth fibrous layer 340 between the second fibrous layer 320 and the second fibrous layer 330.

According to Example 3 of the present invention, the first and fourth fibrous layers 310 to 340 include an aramid woven fabric as a network of high-strength fiber. The aramid woven fabric may be coated with a water repellent including fluorocarbon, a cross-linking agent, and a hardness-enhancing resin. Here, the cross-linking agent is an isocyanate-based compound and the hardness-enhancing resin is polyvinyl acetate.

The second and third fibrous layers 320 and 330 include a carbon fiber network. The carbon fiber network is a woven fabric including carbon spun yarn as warp and weft, and is coated with a composition including a phenol resin and a polyvinyl butyral resin.

The bulletproof material 300 includes the first to fourth fibrous layers 310, 320, 330, and 340 in the proper number of plies in order to have mass per unit area satisfying lightening requirements of a bulletproof vest, e.g., a mass per unit area of 3 to 6.8 kg/m². The first to fourth fibrous layers 310, 320, 330, and 340 are bonded to each other through a method such as diamond stitching.

A method of laminating/bonding the first to fourth fibrous layers 310, 320, 330, and 340 is similar to those of Examples 1 and 2. That is, a composite sheet of the first fibrous layer 313 and the second fibrous layer 320 and a composite sheet of the third fibrous layer 330 and the fourth fibrous layer 340 are respectively formed, and then, the composite sheets are laminated with the first fibrous layers 311 and 312 in a manner illustrated in FIG. 3. Subsequently, they may be bonded to each other through diamond stitching.

In addition, the process of coating the carbon fiber network, which constitutes each of the second and third fibrous layers 320 and 330, with the composition may be performed while forming each of the composite sheets.

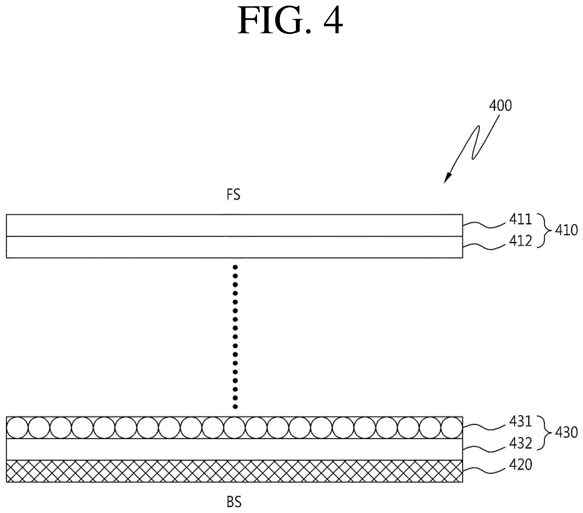

Hereinafter, a bulletproof material according to Example 4 of the present invention is described with reference to FIG. 4.

As illustrated in FIG. 4, a bulletproof material 400 according to Example 4 of the present invention includes a plurality of first fibrous layers 410 at a front side (FS), a second fibrous layer 420 at a back side (BS), and third and fourth fibrous layers 431 and 432 between the first fibrous layers 410 and the second fibrous layer 420.

According to Example 4 of the present invention, the first fibrous layers 410 include an aramid woven fabric as a network of high-strength fiber. The aramid woven fabric may be coated with a water repellent including fluorocarbon, a cross-linking agent, and a hardness-enhancing resin. Here, the cross-linking agent is an isocyanate-based compound and the hardness-enhancing resin is polyvinyl acetate.

The second fibrous layer 420 at a back side (BS) of the bulletproof material 400 includes a carbon fiber network. The carbon fiber network is a woven fabric including carbon spun yarn as warp and weft, and is coated with a composition including a phenol resin and a polyvinyl butyral resin.

Each of the third and fourth fibrous layers 431 and 432 includes a plurality of high-strength fibers which are unidirectionally oriented, e.g., ultrahigh-molecular-weight polyethylene fibers or aramid fibers. High-strength fibers of the third and fourth fibrous layers 431 and 432 are coated with a composition including a polyurethane resin, and thus, arrangements of the high-strength fibers may be maintained. The composition may be sprayed onto the high-strength fiber or applied to the high-strength fibers in a film type. The third and fourth fibrous layers 431 and 432 adjacent to each other are cross-plied at an angle of about 90° to form one unidirectional fabric 430.

First, one composite sheet is formed by passing the carbon fiber network coated with the composition, i.e., the second fibrous layer 420, along with the unidirectional fabric 430 through a high-temperature and high-pressure pressurizer. This composite sheet is laminated with the first fibrous layers 410 as illustrated in FIG. 4, followed by bonding the same through, for example, diamond stitching.

Selectively, the coating process and the composite sheet formation process may be simultaneously performed. That is, a composite sheet of the unidirectional fabric 430 and the second fibrous layer 420 may be formed by inserting the polymer film of the composition between the carbon fiber network and the unidirectional fabric 430 and maintaining the same at about 50°C, followed by pressing the same by means of a roller heated to about 160°C.

Selectively, one or more unidirectional fabrics may be included between the composite sheet and the first fibrous layers 410.

Although not shown, one first fibrous layer, i.e., an aramid woven fabric, may be further included between the unidirectional fabric 430 and the second fibrous layer 420. In this case, a composite sheet of the second fibrous layer 420 and the aramid woven fabric is first prepared using the methods described above, followed by being bonded to each other along with the first fibrous layers 410 and the unidirectional fabric(s) 430 through diamond stitching.

The bulletproof material 400 according to Example 4 includes the plurality of the first fibrous layers 410 at a front side (FS), the second fibrous layer 420 at a back side (BS), and the third and fourth fibrous layers 431 and 432 between the first fibrous layers 410 and the second fibrous layer 420.

As described above, the bulletproof materials 100, 200, 300, and 400 according to the present invention include the fibrous layer including the carbon fiber network at a back side (BS) or near a back side (BS), whereby impact by collision with bullets may be dispersed around. As a result, back-side deformation characteristics of the bulletproof materials 100, 200, 300, and 400 may be enhanced.

In addition, the carbon fiber network is relatively soft, compared to a rigid material such as a polypropylene film conventionally suggested to enhance back-side deformation characteristics, thus providing a bulletproof vest having wearing sensation far superior to the polypropylene film.

Now, the present invention will be described in more detail with reference to the following examples and comparative examples. These examples are provided only for illustration of the present invention and should not be construed as limiting the scope and spirit of the present invention.

### <Preparation of aramid woven fabric>

### Preparation Example 1

Plain weaving was performed using aramid fiber (KOLON INDUSTRIES, HERA CRON® HF 100) having a fineness of 840 denier as warp and weft to prepare an aramid woven fabric. Each of a warp density and a weft density of the aramid woven fabric was 105 strands/cm. The woven fabric was treated with a scouring agent including Na₂CO₃ at about 60°C, followed by washing and drying.

Subsequently, the scoured woven fabric was immersed in a water repellent. The water repellent included 3% by weight of hydroxylated perfluoroalkylethyl acrylate copolymer, 3% by weight of polyvinyl acetate, 3% by weight of toluene diisocyanate, 0.3% by weight of dipropylene glycol, 0.3% by weight of malic acid, and 90.4% by weight of water. The woven fabric impregnated with the water repellent was heat-treated at about 160°C for 60 seconds to complete an aramid woven fabric. The aramid woven fabric has a mass per unit area of 200 g/m².

### <Preparation of composite sheet including carbon yarn fabric>

### Preparation Example 2

Plain weaving was performed using carbon spun yarn having a fineness Of 400 denier as warp and weft to prepare a carbon yarn fabric. A warp density and a weft density of the carbon yarn fabric were respectively 173 strands/cm.

Subsequently, a polymer film including 48% by weight of a phenol resin, 48% by weight of a polyvinyl butyral resin, and 4% by weight of dioctyl phthalate (DOP) was inserted between the carbon yarn fabric and the aramid woven fabric prepared according to Preparation Example 1, and the resultant structure was passed through a chamber maintained at about 50°C, followed by pressing by means of a roller heated to about 160°C. As a result, a composite sheet including the carbon yarn fabric was completed. The composite sheet including the carbon yarn fabric had a mass per unit area of 380 g/m².

### Preparation Example 3

A carbon yarn fabric having a mass per unit area of 160 g/m² was prepared in the same manner as that exemplified in Preparation Example 2.

### <Preparation of unidirectional ultrahigh-molecular-weight polyethylene fabric>

### Preparation Example 4

A bundle of ultrahigh-molecular-weight polyethylene fibers having a fineness of 1500 denier [Dyneema®, manufactured by DSM] was substantially arranged in one direction on the same plane and then coated by spraying with an adhesive. As a result, first and second fibrous layers were respectively prepared. Subsequently, the first and second fibrous layers were cross-plied at an angle of about 90°, thus completing a unidirectional ultrahigh-molecular-weight polyethylene fabric. The unidirectional ultrahigh-molecular-weight polyethylene fabric had a mass per unit area of 140 g/m².

### <Examples>

### Example 1

30-ply aramid woven fabrics prepared according to Preparation Example 1 and the one-ply composite sheet including carbon yarn fabric prepared according to Preparation Example 2 were sequentially laminated as illustrated in FIG. 1 and then bonded to each other through diamond stitching. As a result, a bulletproof material was completed. The total mass per unit area of the bulletproof material was 6.38 kg/m².

### Example 2

28-ply aramid woven fabrics prepared according to Preparation Example 1 and two-ply composite sheets including carbon yarn fabric prepared according to Preparation Example 2 were sequentially laminated as illustrated in FIG. 3 and then bonded to each other through diamond stitching. As a result, a bulletproof material was completed. The total mass per unit area of the bulletproof material was 6.36 kg/m².

### Example 3

26-ply aramid woven fabrics prepared according to Preparation Example 1 and three-ply composite sheets including carbon yarn fabric prepared according to Preparation Example 2 were sequentially laminated and then bonded to each other through diamond stitching. As a result, a bulletproof material was completed. The total mass per unit area of the bulletproof material was 6.34 kg/m².

### Example 4

23-ply aramid woven fabrics prepared according to Preparation Example 1, 10-ply unidirectional ultrahigh-molecular-weight polyethylene fabrics prepared according to Preparation Example 4, and one-ply composite sheets including carbon yarn fabric prepared according to Preparation Example 2 were sequentially laminated and then bonded to each other through diamond stitching. As a result, a bulletproof material was completed. The total mass per unit area of the bulletproof material was 6.38 kg/m².

### Example 5

31-ply aramid woven fabrics prepared according to Preparation Example 1 and a one-ply carbon yarn fabric prepared according to Preparation Example 3 were sequentially laminated as illustrated in FIG. 3 and then bonded to each other through diamond stitching. As a result, a bulletproof material was completed. The total mass per unit area of the bulletproof material was 6.36 kg/m².

### <Comparative Examples>

### Comparative Example 1

32-ply aramid woven fabrics prepared according to Preparation Example 1 were laminated alone and then bonded to each other through diamond stitching. As a result, a bulletproof material was completed. The mass per unit area of the bulletproof material was 6.4 kg/m².

### Comparative Example 2

36-ply unidirectional ultrahigh-molecular-weight ethylene fabrics prepared according to Preparation Example 4 were laminated alone and then bonded to each other through diamond stitching. As a result, a bulletproof material was completed. The mass per unit area of the bulletproof material was 5.04 kg/m².

### Comparative Example 3

A polypropylene film having a mass per unit area of 100 g/m² was adhered onto a side of a bulletproof material obtained according to Comparative Example 1.

Bulletproof performance and back-side deformation characteristics of each of the bulletproof materials prepared according to the examples and the comparative examples, and wearing sensation of each of the bulletproof materials were measured according to the following methods. Results are summarized in Tables 1 and 2 below.

### Bulletproof performance (V₅₀) and back-side deformation measurements

Average speed (V₅₀)(m/s) that indirectly indicates a bulletproof performance degree of a bulletproof material against fragments was measured according to a test method regulated by MIL-STD-662F using fragment simulated projectiles (FSP) regulated by MIL-P-46593A. Back side deformation was measured using 44 Mag. bullets that were applied to NIJ0101.06 version Level IIIA.

### Wearing sensation (softness) measurement

Firmness indicating stiffness of an individual bulletproof material, as a criterion of wearing sensation, was measured. A measurement method called "circular bend test" was performed based on ASTM D4032-94.

**[Table 1]**

| | Average speed (V₅₀)(m/s) | Back-side deformation (mm) |
|---|---|---|
| Example 1 | 665 | 35 |
| Example2 | 652 | 38 |
| Example3 | 647 | 42 |
| Example4 | 643 | 39 |
| Example5 | 653 | 41 |
| Comparative Example1 | 660 | 40 |
| Comparative Example2 | 602 | 39 |
| Comparative Example3 | 654 | 39 |

**[Table 2]**

| | Firmness (N) |
|---|---|
| Preparation Example 1 | 15 |
| Preparation Example2 | 63 |
| Preparation Example3 | 13 |
| Preparation Example4 | 120 |

## Claims

1. A bulletproof material (100) having a front side (FS) to be struck by a bullet and a back side (BS) at an opposite side of the front side, the bulletproof material comprising:
a plurality of first fibrous layers (110) at the front side; and
a second fibrous layer (120), wherein each of the first fibrous layers comprises a network of high-strength fiber having a tenacity of 11 g/denier or more and a tensile modulus of 200 g/denier or more, and
the second fibrous layer comprises a network of carbon fiber,
wherein the carbon fiber network is a woven fabric comprising carbon spun yarn as warp and weft, **characterized in that**:
the carbon fiber network is coated with a composition comprising a phenol resin and a polyvinyl butyral resin, and
the composition comprises 20 to 70% by weight of the phenol resin, 20 to 70% by weight of the polyvinyl butyral resin, and 1 to 10% by weight of a plasticizer.

2. The bulletproof material according to claim 1, wherein the network of the high-strength fiber is an aramid woven fabric comprising aramid fiber as warp and weft.

3. The bulletproof material according to claim 2, wherein the network of the high-strength fiber is coated with a water repellent comprising fluorocarbon, a cross-linking agent and a hardness-enhancing resin, wherein the cross-linking agent is an isocyanate-based compound and the hardness-enhancing resin is polyvinyl acetate.

4. The bulletproof material according to claim 1, wherein the network of the high-strength fiber comprises a plurality of unidirectionally oriented ultrahigh-molecular-weight polyethylene fibers.

5. The bulletproof material according to claim 4, wherein the network of the high-strength fiber is coated with a composition comprising a polyurethane resin.

6. The bulletproof material according to claim 1, wherein the second fibrous layer is disposed at the back side.

7. The bulletproof material according to claim 1, further comprising a third fibrous layer at the back side, wherein the third fibrous layer comprises an aramid woven fabric, and the second fibrous layer is disposed between the first fibrous layer and the third fibrous layer.

8. The bulletproof material according to claim 7, wherein the network of the high-strength fiber is an aramid woven fabric, and
the aramid woven fabrics of the first and third fibrous layers are coated with a water repellent comprising fluorocarbon, a cross-linking agent, and a hardness-enhancing resin, wherein the cross-linking agent is an isocyanate-based compound and the hardness-enhancing resin is polyvinyl acetate.

9. The bulletproof material according to claim 1, further comprises a third fibrous layer at the back side; and a fourth fibrous layer between the second and third fibrous layers,
wherein the third fibrous layer comprises a network of carbon fiber, and
the fourth fibrous layer comprises an aramid woven fabric.

10. The bulletproof material according to claim 9, wherein the network of the high-strength fiber is an aramid woven fabric,
the aramid woven fabrics of the first and fourth fibrous layers are coated with a water repellent comprising fluorocarbon, a cross-linking agent, and a hardness-enhancing resin, wherein the cross-linking agent is an isocyanate-based compound and the hardness-enhancing resin is polyvinyl acetate, and
the carbon fiber network of the third fibrous layer is coated with a composition comprising a phenol resin and a polyvinyl butyral resin.

11. The bulletproof material according to claim 1, further comprising third and fourth fibrous layers between the first fibrous layers and the second fibrous layer,
wherein the network of the high-strength fiber of the first fibrous layers is an aramid woven fabric, and
the third and fourth fibrous layers comprise a plurality of unidirectionally oriented ultrahigh-molecular-weight polyethylene fibers and are cross-plied to each other.

12. The bulletproof material according to claim 11, wherein the aramid woven fabric is coated with a water repellent comprising fluorocarbon, a cross-linking agent, and a hardness-enhancing resin, wherein the cross-linking agent is an isocyanate-based compound and the hardness-enhancing resin is polyvinyl acetate, and
the ultrahigh-molecular-weight polyethylene fibers are coated with a composition comprising a polyurethane resin.

## Patentansprüche

1. Kugelsicheres Material (100) mit einer Vorderseite (FS), die von einer Kugel zu treffen ist, und einer Rückseite (BS) an einer der Vorderseite entgegengesetzten Seite, wobei das kugelsichere Material aufweist:
mehrere erste Faserschichten (110) an der Vorderseite; und
eine zweite Faserschicht (120),
wobei jede der ersten Faserschichten ein Netzwerk aus hochfester Faser mit einer Zugfestigkeit von 11 g/Denier oder mehr und einem Zugmodul von 200 g/Denier oder mehr und aufweist,
die zweite Faserschicht ein Netzwerk aus Kohlenstofffaser aufweist,
wobei das Kohlenstofffaser-Netzwerk ein Gewebe ist, das Kohlenstoffspinngarn als Kette und Schuss aufweist,
**dadurch gekennzeichnet, dass**:
das Kohlenstoffaser-Netzwerk mit einer Zusammensetzung beschichtet ist, die ein Phenolharz und ein Polyvinylbutyralharz aufweist, und
die Zusammensetzung zu 20 bis 70 Gew.-% von dem Phenolharz, zu 20 bis 70 Gew.-% von dem Polyvinylbutyralharz, und von 1 bis 10 Gew.-% ein Plastifizierungsmittel aufweist.

2. Kugelsicheres Material nach Anspruch 1, wobei das Netzwerk aus hochfester Faser ein Aramidgewebe ist, das Aramidfasern als Kette und Schuss aufweist.

3. Kugelsicheres Material nach Anspruch 2, wobei das Netzwerk aus hochfester Faser mit einem wasserabweisenden Mittel beschichtet ist, das Fluorkohlenstoff, ein Vernetzungsmittel und ein härteverstärkendes Harz aufweist, wobei das Vernetzungsmittel eine Verbindung Isocyanatbasis ist und das härteverstärkende Harz Polyvinylacetat ist.

4. Kugelsicheres Material nach Anspruch 1, wobei das Netzwerk aus hochfester Faser mehrere unidirektional orientierte Polyethylenfasern mit ultrahohem Molekulargewicht aufweist.

5. Kugelsicheres Material nach Anspruch 4, wobei das Netzwerk aus hochfester Faser mit einer Zusammensetzung beschichtet ist, die ein Polyurethanharz aufweist.

6. Kugelsicheres Material nach Anspruch 1, wobei die zweite Faserschicht auf der Rückseite angeordnet ist.

7. Kugelsicheres Material nach Anspruch 1, ferner aufweisend eine dritte Faserschicht auf der Rückseite, wobei die dritte Faserschicht ein Aramidgewebe aufweist und die zweite Faserschicht zwischen der ersten Faserschicht und der dritten Faserschicht angeordnet ist.

8. Kugelsicheres Material nach Anspruch 7, wobei das Netzwerk aus hochfester Faser ein Aramidgewebe ist und die Aramidgewebe der ersten und der dritten Faserlage mit einem wasserabweisenden Mittel beschichtet sind, das Fluorkohlenstoff, ein Vernetzungsmittel, und ein härteverstärkendes Harz aufweist, wobei das Vernetzungsmittel eine Verbindung auf Isocyanatbasis ist und das härteverstärkende Harz Polyvinylacetat ist.

9. Kugelsicheres Material nach Anspruch 1, ferner aufweisend eine dritte Faserschicht auf der Rückseite; und eine vierte Faserschicht zwischen der zweiten und der dritten Faserschicht,
wobei die dritte Faserschicht ein Netzwerk aus Kohlenstofffasern aufweist und die vierte Faserschicht ein Aramidgewebe aufweist.

10. Kugelsicheres Material nach Anspruch 9, wobei das Netzwerk aus hochfester Faser ein Aramidgewebe ist, die Aramidgewebe der ersten und vierten Faserlage sind mit einem wasserabweisenden Mittel beschichtet, das Fluorkohlenstoff, ein Vernetzungsmittel und ein die härteverstärkendes Harz aufweist, wobei das Vernetzungsmittel eine Verbindung auf Isocyanatbasis ist und das härteverstärkende Harz Polyvinylacetat ist, und
das Kohlenstoffaser-Netzwerk der dritten Faserschicht mit einer Zusammensetzung beschichtet ist, die ein Phenolharz und ein Polyvinylbutyralharz aufweist.

11. Kugelsicheres Material nach Anspruch 1, ferner aufweisend eine dritte und vierte Faserschicht zwischen den ersten Faserschichten und der zweiten Faserschicht,
wobei das Netzwerk aus hochfester Faser der ersten Faserschichten ein Aramidgewebe ist, und
die dritte und vierte Faserschicht mehrere unidirektional orientierte Polyethylenfasern mit ultrahohem Molekulargewicht aufweisen und kreuzweise miteinander verbunden sind.

12. Kugelsicheres Material nach Anspruch 11, wobei das Aramidgewebe mit einem wasserabweisenden Mittel beschichtet ist, das Fluorkohlenstoff, ein Vernetzungsmittel und ein härteverstärkendes Harz aufweist, wobei das Vernetzungsmittel eine Verbindung auf Isocyanatbasis ist und das härteverstärkende Harz Polyvinylacetat ist, und
die ultrahochmolekularen Polyethylenfasern mit einer Zusammensetzung beschichtet sind, die ein Polyurethanharz aufweist.

## Revendications

1. Un matériau pare-balles (100) ayant un côté avant (FS) devant être frappé par une balle et un côté arrière (BS) sur un côté opposé du côté avant, le matériau pare-balles comprenant:
une pluralité de premières couches fibreuses (110) sur le côté avant; et
une seconde couche fibreuse (120),
chacune des premières couches fibreuses comprenant un réseau de fibres à haute résistance ayant une ténacité de 11 g/denier ou plus et un module de traction de 200 g/denier ou plus, et
la seconde couche fibreuse comprenant réseau de fibre de carbone,
dans lequel le réseau de fibres de carbone est un tissu tissé comprenant un filé de carbone comme chaîne et trame,
**caractérisé en ce que** :
le réseau de fibres de carbone est recouvert d'une composition comprenant une résine de phénol et une résine de polyvinylbutyral, et
la composition comprend 20 à 70% en poids de la résine de phénol, 20 à 70% en poids de la résine de polyvinylbutyral, et 1 à 10% d'un plastifiant.

2. Le matériau pare-balles selon la revendication 1, dans lequel le réseau de la fibre à haute résistance est un tissu tissé en aramide comprenant une fibre d'aramide comme chaîne et trame.

3. Le matériau pare-balles selon la revendication 2, dans lequel le réseau de la fibre à haute résistance est recouvert d'un hydrofuge comprenant du fluorocarbone, un agent de réticulation et une résine améliorant la dureté, dans lequel l'agent de réticulation est un composé à base d'isocyanate et la résine améliorant la dureté est l'acétate de polyvinyle.

4. Le matériau pare-balles selon la revendication 1, dans lequel le réseau de la fibre à haute résistance comprend une pluralité de fibres de polyéthylène à poids moléculaire ultra-élevé orientées de manière unidirectionnelle.

5. Le matériau pare-balles selon la revendication 4, dans lequel le réseau de la fibre à haute résistance est recouvert d'une composition comprenant une résine de polyuréthane.

6. Le matériau pare-balles selon la revendication 1, dans lequel la seconde couche fibreuse est disposée sur le côté arrière.

7. Le matériau pare-balles selon la revendication 1, comprenant en outre une troisième couche fibreuse sur le côté arrière, dans lequel la troisième couche fibreuse comprend un tissu tissé en aramide, et la seconde couche fibreuse est disposée entre la première couche fibreuse et la troisième couche fibreuse.

8. Le matériau pare-balles selon la revendication 7, dans lequel le réseau de la fibre à haute résistance est un tissu tissé en aramide, et
les tissus aramides des première et troisième couches fibreuses sont revêtus d'un agent hydrofuge comprenant du fluorocarbone, un agent de réticulation, et une résine améliorant la dureté, dans laquelle l'agent de réticulation est un composé à base d'isocyanate et la résine améliorant la dureté est l'acétate de polyvinyle.

9. Le matériau pare-balles selon la revendication 1, comprenant en outre une troisième couche fibreuse sur le côté arrière; et une quatrième couche fibreuse entre les seconde et troisième couches fibreuses,
dans laquelle la troisième couche fibreuse comprend un réseau de fibres de carbone, et
la quatrième couche fibreuse comprend un tissu tissé en aramide.

10. Le matériau pare-balles selon la revendication 9, dans lequel le réseau de la fibre à haute résistance est un tissu tissé en aramide,
les tissus tissés en aramide des première et quatrième couches fibreuses sont revêtus d'un agent hydrofuge comprenant du fluorocarbone, un agent de réticulation, et une résine améliorant la dureté, dans laquelle l'agent de réticulation est un composé à base d'isocyanate et la résine améliorant la dureté est l'acétate de polyvinyle, et
les réseaux de fibres de carbone des deuxième et troisième couches fibreuses sont revêtus d'une composition comprenant une résine phénolique et une résine de polyvinylbutyral.

11. Le matériau pare-balles selon la revendication 1, comprenant en outre des troisième et quatrième couches fibreuses entre les premières couches fibreuses et la deuxième couche fibreuse,
dans lequel le réseau de la fibre à haute résistance des premières couches fibreuses est un tissu tissé en aramide, et
les troisième et les quatrièmes couches fibreuses comprennent une pluralité de fibres de polyéthylène à poids moléculaire ultra-élevé orientées de manière unidirectionnelle et sont croisées les unes par rapport aux autres.

12. Le matériau pare-balles selon la revendication 11, dans lequel le tissu tissé en aramide est enduit d'un hydrofuge comprenant du fluorocarbone, un agent de réticulation et une résine améliorant la dureté, dans lequel l'agent de réticulation est un composé à base d'isocyanate et la résine améliorant la dureté est l'acétate de polyvinyle, et
les fibres de polyéthylène à poids moléculaire ultra-élevé sont revêtues d'une composition comprenant une résine de polyuréthanne.
